# EUROPEAN PATENT SPECIFICATION

(11) **EP 3 523 510 B1**
(45) Date of publication and mention of the grant of the patent: **04.11.2020**
(21) Application number: 17783557.6
(22) Date of filing: 05.10.2017
(51) Int. Cl.: H02K 7/14, H02K 16/00, F01L 9/04, F01L 1/18, H02K 7/075

(54) **ELECTROMAGNETIC ACTUATOR AND METHODS OF OPERATION THEREOF**
ELEKTROMAGNETISCHER AKTUATOR UND VERFAHREN ZUM BETRIEB DAVON
ACTIONNEUR ÉLECTROMAGNÉTIQUE ET SES PROCÉDÉS DE FONCTIONNEMENT

(30) Priority: 06.10.2016 GB 201616982
(43) Date of publication of application: 14.08.2019
(73) Proprietor: Camcon Auto Limited, Histon Cambridge Cambridgeshire CB24 9NL (GB)
(72) Inventor: STONE, Roger, Brighton East Sussex BN2 1EH (GB); TYRRELL, Richard, Steyning West Sussex BN44 3TN (GB); EVANS, Owen, Hove, BN3 5FD (GB); KELLY, David, Leamington Spa Warwickshire CV31 1NB (GB)
(74) Representative: Sharrock, Daniel John
(86) International application number: PCT/GB2017/053016
(87) International publication number: WO 2018/065774

(56) References cited:
- WO-A2-2011/061528
- DE-A1-102014 208 420

## Description

### Field of the Invention

The present invention relates to an electromagnetic actuator. More particularly, it relates to a rotary electromagnetic actuator having a rotor which is rotatable relative to a stator and including a biasing assembly for applying a torque to the rotor. Such an actuator may be used to operate a poppet valve of an internal combustion engine for example.

### Background to the Invention

WO2004/097184 describes a rotary electromagnetic actuator which may be used to open and close a valve of an internal combustion engine. In one example, a resilient cantilevered spring arm is in contact with the outer circumference of an eccentric surface which rotates with the rotor. The arm is deformed over part of the rotation of the rotor and thereby stores strain energy which is subsequently used to accelerate the rotation of the rotor.

A further rotary electromagnetic actuator is disclosed in WO2011/061528. A biasing arrangement applies a torque to the rotor of the actuator which varies with the rotational position of the rotor. DE102014208420 relates to a valve actuation device for a valve drive of an internal combustion engine.

### Summary of the Invention

The present invention is directed at an electromagnetic actuator for operating a poppet valve of an internal combustion engine, the actuator comprising:
a stator;
a rotor which is rotatable relative to the stator over a range of rotation of the rotor; and
a biasing assembly for applying a torque to the rotor.

According to the invention the biasing assembly is switchable between:
(a) a first configuration in which the biasing assembly exerts a torque on the rotor over at least part of the range of rotation of the rotor, wherein the torque exerted varies with the rotational position of the rotor according to a torque profile; and
(b) a second configuration in which the biasing assembly exerts no or substantially no torque on the rotor over the range of rotation of the rotor.

The inventors realised that in some applications for an electromagnetic actuator including a biasing assembly, it can be beneficial to be able selectively to effectively remove the biasing effect (for practical purposes) or remove it altogether.

For example, in applications where the actuator is used to operate a valve of an internal combustion engine, each cycle of the rotor (which may be a full rotation of the rotor or rotation of the rotor back and forth across its range of rotation) may correspond to a valve event, that is the opening and closing of the associated valve. It may be desirable to modify the operating characteristics of the electromagnetic actuator from one valve event or actuator cycle to the next. With an actuator of the present disclosure, the influence of the biasing assembly can be removed entirely from one or more cycles depending on the operating conditions of the engine.

For example, during high energy valve events (that is when a rapid, high lift event is required), it may be preferable to utilise the full benefit of the biasing assembly and the energy recycling it provides to minimise energy consumption. Conversely, during gentler, slower valve events, it may be preferable to disengage the biasing assembly. This is facilitated by the present invention.

In some embodiments, the range of rotation of the rotor may be a portion of a full rotation, with the rotor being controllable to oscillate back and forth over this portion. Alternatively, the range of rotation of the rotor may be a full rotation, enabling the rotor to rotate continuously in the same direction and/or oscillate between two end points.

In preferred embodiments, kinetic energy of the rotor is converted into potential energy stored in the biasing assembly over part of the rotation of the rotor and then this potential energy is subsequently transferred back to the rotor during another part of the rotation of the rotor in order to accelerate the rotation of the rotor.

The biasing assembly may be implemented mechanically, hydraulically or pneumatically, for example. Preferably, the biasing assembly is a mechanical assembly and comprises a resilient mechanical component. This component may serve to generate a biasing force which is exerted on the rotor by the biasing assembly.

The rotor may be coupled to the biasing assembly such that, as the rotor rotates over at least part of its range of rotation, part of the resilient mechanical component is moved or deflected. The constraining member may act to constrain movement of part of the resilient mechanical component (causing it to deform and exert a torque on the rotor) or provide no constraint (such that the component is not deformed and so does not exert a torque on the rotor). In this way, a constraining member may be operable to control whether a torque is exerted on the rotor by the biasing assembly. The constraining member may contact the resilient mechanical component directly.

In some embodiments, the rotor defines a cam surface and the biasing assembly includes a cam follower in engagement with the cam surface, and the magnitude of the torque exerted on the rotor by the biasing assembly is dependent on the magnitude of the displacement of the cam follower by the cam surface. Preferably, a first part of the resilient mechanical component forms or is coupled to the cam follower and moves in response to movement of the cam follower. In further embodiments, a second part of the resilient mechanical component is more constrained in the first configuration of the biasing assembly than in the second configuration.

It will be appreciated that the resilient mechanical component of the biasing assembly may take various forms, such as a spring or a block of resilient material.

In some implementations, the resilient mechanical component is a leaf spring which is pivotably mounted. In such a configuration, a portion of the spring which is spaced from the pivot is deflected over at least part of the rotation range of the rotor.

The cam follower may be urged towards the resilient mechanical component. The resilient component may in turn be urged towards the constraining member. This is to avoid rattling of parts when the biasing assembly is not exerting a torque on the rotor via the cam follower. Each urging force may be generated by a resilient element such as a spring, for example. Both urging forces may be generated by the same resilient element acting on the cam follower.

In further embodiments, movement of the second part of the resilient mechanical component is constrainable by reducing the distance between an engagement surface of the constraining member and the resilient mechanical component (that is, the distance between the engagement surface and the resilient component when the resilient component is in its undeflected, or minimum deflection position). For example, the constraining member may be a rotatable member which is rotated between its first orientation and its second orientation when the biasing assembly moves between its first configuration and its second configuration, respectively, wherein the engagement surface of the constraining member moves in a direction towards the resilient mechanical component when the rotatable member moves from its first orientation to its second orientation.

The present invention further provides a control mechanism in combination with an actuator as described herein, wherein the control mechanism comprises:
a controller which is moveable between first and second controller positions; and
a coupling between the controller and the biasing assembly,
wherein the coupling is arranged such that when the controller is in the first controller position, the coupling urges the constraining member towards its first orientation.

It may be preferable to have a resilient, urging coupling between the controller and the biasing assembly, rather than a rigid coupling arrangement. In some instances, the constraining member may not be able to move into its first orientation at the time the controller is switched from its second position to its first position (it may be blocked from doing so by the resilient component of the biasing assembly for example). The use of a resilient coupling or a "lost motion" coupling between the controller and the biasing assembly enables the controller to move so that the coupling urges the constraining member towards its first configuration.

Thus, the controller may be able to move from its second controller position to its first controller position even if the constraining member is not initially able to move into its first orientation.

In some embodiments, the coupling comprises a resilient component which enables the controller to move from its second controller position to its first controller position even if the constraining member is not initially able to move into its first orientation.

The coupling may be able to accommodate movement of the controller from its second to its first position even if the constraining member is not initially able to move into its first configuration, and then move the constraining member into its first orientation as and when it becomes able to do so. The coupling may exert a biasing force on the constraining member towards its first orientation.

In some embodiments, the controller may comprise a rotatable controller member which is rotatably mounted and/or the constraining member may be rotatably mounted. In such a configuration, the resilient component may be a torsion spring, for example.

A control mechanism as described herein may be provided in combination with a plurality of actuators as described herein. Such a combination may include a plurality of couplings, with each coupling provided between the controller and the biasing assembly of a respective one of the actuators, wherein each coupling is arranged such that when the controller is in the first controller position, the coupling urges the constraining member of the respective one of the actuators towards its first orientation. In some applications, a set of actuators may not be controlled to operate simultaneously, but instead are actuated out of phase. This may be the case where the actuators are associated with different cylinders of an internal combustion engine for example. Under some operating configurations, actuators for valves of the same cylinder may have a common controller but operate out of phase. In embodiments of the invention, the couplings between the controller and each biasing assembly are able to accommodate this. As each coupling exerts an urging force on each constraining member, they are able to transmit the switching action several biasing assemblies, with each assembly only switching when it is able to do so. For example, switching may only take place when a biasing assembly is exerting no (or minimal) torque on the associated rotor.

The present invention further provides an internal combustion engine including at least one cylinder having at least one valve and an actuator as described herein, wherein the actuator is arranged to actuate the at least one valve. In further embodiments, an engine may include a plurality of cylinders each having at least one valve and a combination of a control mechanism with an actuator as described herein, with each of the actuators arranged to actuate a respective valve.

In some implementations, one controller may be coupled to the biasing assemblies of a plurality of actuators such that a single controller is able to switch a plurality of actuators, with the couplings accommodating out of phase operation of the actuators so that each actuator is only switched when it is able to do so.

In other implementations, each actuator may have its own coupling and controller with each controller being moveable independently of the other controllers. In this way, the biasing assembly of each actuator may be switched by its own corresponding controller independently of the others.

In further embodiments, an engine may include a plurality of cylinders each having at least two valves, with one valve of each cylinder belonging to a first set of valves and a second valve of each set belonging to a second set of valves. Each set of valves may have an associated controller, with couplings provided between the controller and each valve of the respective set, with the controller associated with each set being moveable independently of the other controller. For example, an internal combustion engine may have a pair of inlet valves (or a pair of outlet valves) associated with each cylinder. One valve of each pair may be designated as a primary valve and the other as a secondary valve. The primary valves may form a first set with their own controller and the second secondary valves form a second set, again with their own controller. In some operating modes of the engine, it may be desirable for the primary valves to be operated in a different manner to the secondary valves and this configuration facilitates this. For example, in one mode, the biasing assemblies of the first set may be in their first configuration, whilst the biasing assemblies of the second set may be in their second configuration (or vice versa).

Furthermore, the present invention is directed at a method of operating an electromagnetic actuator for a poppet valve of an internal combustion engine, the actuator comprising:
a stator;
a rotor which is rotatable relative to the stator over a range of rotation of the rotor; and
a biasing assembly for applying a torque to the rotor.

According to the invention, the method comprises a step of switching the biasing assembly between:
(a) a first configuration in which the biasing assembly exerts a torque on the rotor over at least part of the range of rotation of the rotor, wherein the torque exerted varies with the rotational position of the rotor according to a torque profile; and
(b) a second configuration in which the biasing assembly exerts no or substantially no torque on the rotor over the range of rotation of the rotor.

### Brief description of the Drawings

Embodiments of the invention will now be described by way of example and with reference to the accompanying schematic drawings, wherein:
Figure 1 is a perspective front view of a pair of rotary electromagnetic actuators, with one of the actuators embodying the invention;
Figure 2 is a plan view of part of an internal combustion engine including a set of actuators according to an embodiment of the invention;
Figures 3 and 4 are end and side views, respectively of the assembly shown in Figure 2 with the biasing assemblies of the actuators in their first, activated configuration, with Figure 3 being a cross-sectional end view along line A-A marked in Figure 4;
Figures 5 and 6 are end and side views, respectively of the assembly shown in Figure 2 with the biasing assemblies of the actuators in their second, deactivated configuration, with Figure 5 being a cross-sectional end view along line B-B marked in Figure 6;
Figure 7 is a perspective rear view of the pair of actuators shown in Figure 1;
Figure 8 is an enlarged perspective view of one end of the assembly shown in Figure 3;
Figure 9 is a cross-sectional end view of the assembly shown in Figure 2 along line C-C;
Figure 10 is a plan view of part of an internal combustion engine according to another embodiment of the invention; and
Figure 11 is a perspective end view of part of the assembly shown in Figure 10.

### Detailed description of the Drawings

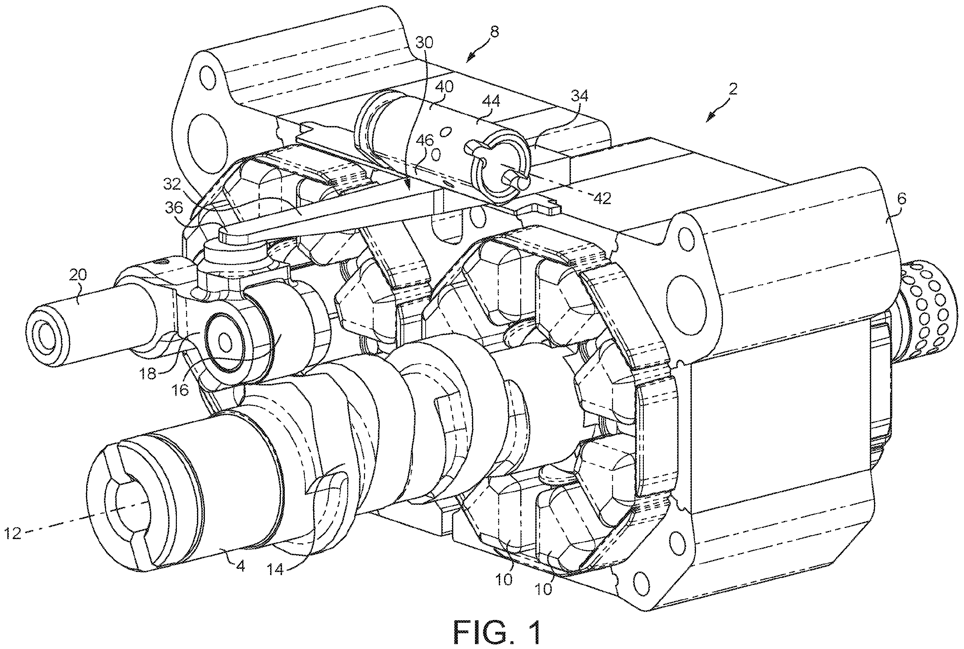

A rotary electromagnetic actuator 2 embodying the invention is shown in Figure 1. It includes a rotor 4 which is rotatably mounted in a stator 6. In the embodiment shown, the stator 6 is shared with a second actuator 8. The stator includes eight coils 10 which are evenly circumferentially spaced around the rotor, with respect to the rotational axis 12 of the rotor. In operation of the actuator, a magnetically generated torque is exerted on the rotor by selectively energising the stator windings. The rotor of actuator 8 is omitted for clarity in the drawing.

A cam surface 14 is formed on the rotor. A cam follower in the form of a roller 16 is in engagement with the cam surface. The cam follower 16 is rotatably mounted at one end of an arm 18. The other end of the arm is rotatably mounted on a shaft 20. Shaft 20 is supported by a bearing housing for the rotor 4. This bearing housing is omitted for clarity in Figure 1. The exposed part of the shaft 20 is a press fit into a bore in the bearing housing.

The cam follower 16 is urged into engagement with the cam surface 14 by a biasing assembly 30. This assembly includes a leaf spring 32. The leaf spring is pivotably mounted on the stator 6 at a first end 34. A second, opposite end 36 of the leaf spring bears against the cam follower arm 18, urging it downwardly, towards the cam surface 14. The leaf spring, cam follower and cam surface are arranged such that the biasing assembly can exert a force on the rotor which acts to one side of the rotor axis, rather than towards it, so that it generates a torque around this axis.

Preferred cam surface configurations are disclosed in a co-pending UK patent application filed by the present applicants.

The biasing assembly also includes a constraining member in the form of a locking cylinder 40. The locking cylinder 40 is mounted in use for rotation about its central, longitudinal axis 42, by means not shown in Figure 1. When the locking cylinder is orientated as shown in Figure 1, its cylindrical circumferential surface 44 is in engagement with the upper surface of a part of the leaf spring 32 located towards first end 34 and so constrains upward movement of the leaf spring. The circumferential surface of the locking cylinder also includes a flattened, planar portion 46, which extends in a plane parallel to the rotational axis 42 of the locking cylinder and perpendicular to a plane containing that axis.

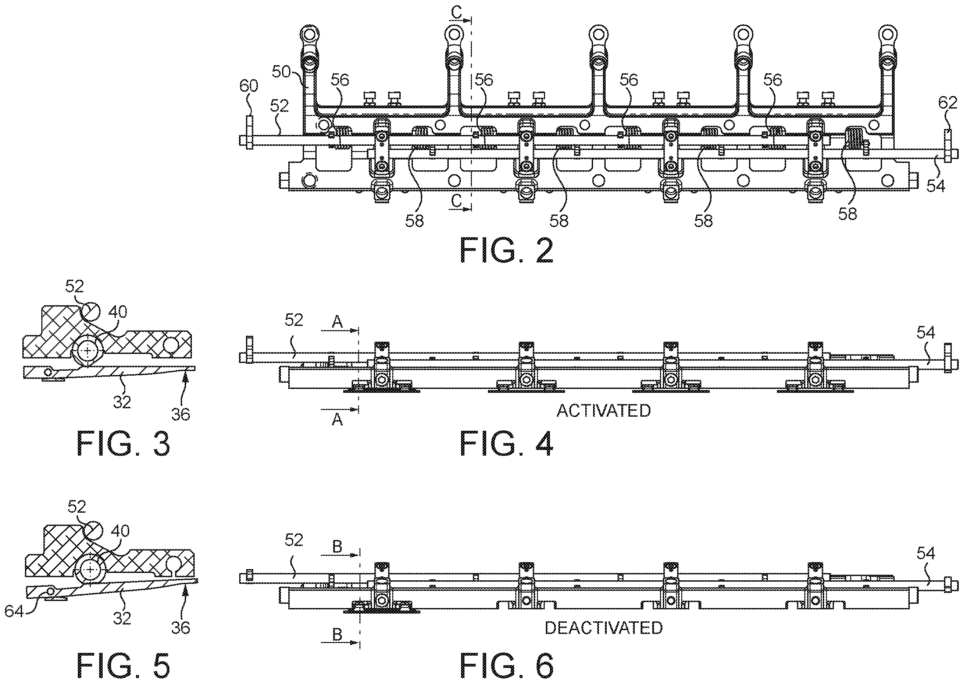

The biasing assembly 30 is switchable between a configuration (as shown in Figure 1) in which upwards movement of the leaf spring in response to the interaction between the cam surface 14 and cam follower 16 is constrained by the constraining member 40, and a second configuration in which the upwards movement of the leaf spring is unconstrained when its second end 36 is moved in response to the interaction between the cam surface 14 and the cam follower 16. This will be described in further detail with reference to Figures 2 to 8.

Figure 2 shows a plan view of an assembly for fastening to an actuator housing which is in turn fastened to the cylinder head of an internal combustion engine. It comprises a supporting framework 50 which carries two control mechanisms for controlling two sets of biasing assemblies, each biasing assembly being associated with a corresponding rotary actuator.

Each of the control mechanisms comprises a controller in the form of a rotatable shaft 52,54. Each shaft is coupled to a set of four actuators by respective couplings 56 and 58. More particularly, the couplings comprise torsion springs connected between each shaft and a constraining member of each actuator biasing assembly. Each shaft is rotatable by a respective actuator (not shown) which is connected to a respective crank arm 60,62.

Figures 3 and 4 show the control mechanisms in their activated configuration and Figures 5 and 6 show the control mechanisms in their deactivated configuration.

In the activated configuration, it can be seen in Figure 3 that the circumferential surface 44 of the locking cylinder 40 is in contact with an upper surface of the leaf spring 32. This corresponds to the orientation shown in Figure 1. Upwards movement of the leaf spring at the location in contact with the constraining member is blocked by the locking cylinder. Accordingly, when the distal end 36 of the leaf spring is pushed upwards by the cam follower arm 18, the leaf spring is therefore deformed and will exert a resilient biasing force on the arm 18. It will also store energy in the form of mechanical strain energy. This energy will then be transferred back to the rotor as and when the end 36 of the leaf spring is allowed to move downwards, causing the cam follower 16 to exert an accelerating torque on the rotor.

In the deactivated configuration shown in Figures 5 and 6, the locking cylinder 40 has been rotated by the associated switching shaft 52. The cylinder has rotated such that its planar face 46 is facing towards the leaf spring. As a result, the surface of the locking cylinder adjacent to the leaf spring is spaced from the leaf spring when the leaf spring is in its non-deflected position. When the distal end 36 of the leaf spring is then displaced upwards by the cam follower arm 18, this movement is not constrained (at least initially) by the locking cylinder 40. The leaf spring is able to pivot upwards about a pivot 64 to the position shown in Figure 5. The upwards movement of the distal end 64 does not therefore deform the leaf spring and so it does not exert a biasing force on the cam follower arm 18 or, in turn, the rotor 4. Accordingly, in this configuration, the biasing assembly 30 does not have a material effect on the rotation of the rotor.

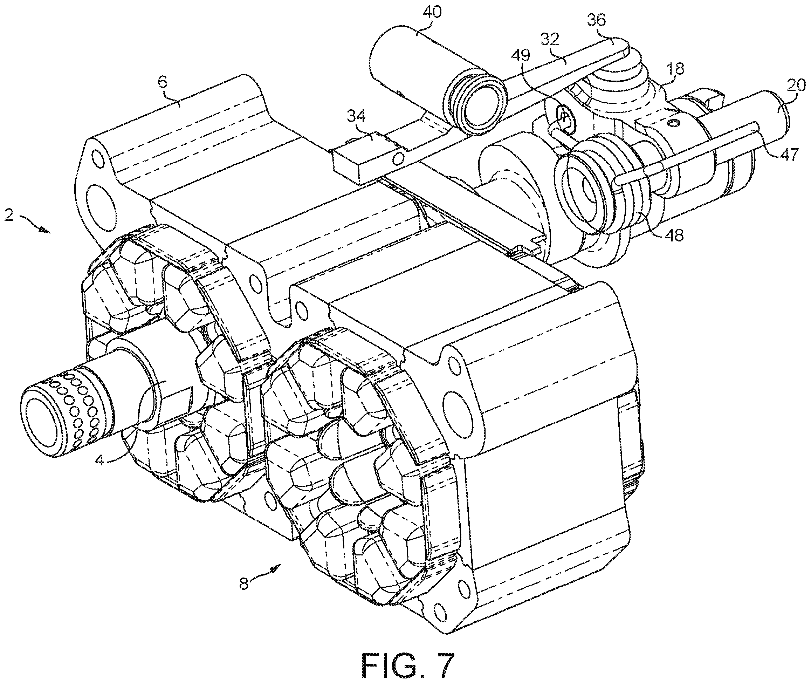

In a preferred configuration shown in Figure 7, the cam follower arm 18 and leaf spring 32 are biased upwards by a coil spring 48. The spring may keep the cam follower arm, the leaf spring and the locking cylinder in contact with each other to avoid rattling of loose parts which may generate noise and wear of the parts. One end 47 of the spring may be held in a fixed position by engagement with a bearing housing (not shown in the Figures), whilst the other end 49 may be coupled to the distal end of the cam follower arm.

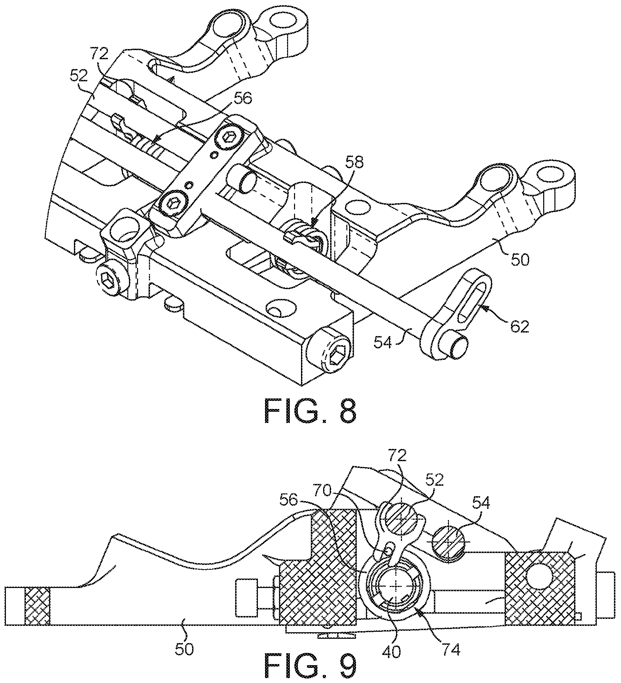

The configuration of the coupling present between each switching shaft 52,54 and the associated locking cylinders is more clearly visible in Figures 8 and 9. Figure 9 shows a coupling associated with switching shaft 52. One end 70 of the torsion spring 56 is connected to an arm 72 mounted on switching shaft 52. The other end 74 of the torsion spring is located in a radial hole in the locking cylinder 40. In Figure 9, switching shaft 52 is in its activated configuration. Clockwise rotation of the shaft when viewed in the direction shown in Figure 9 has moved the arm 72, displacing the associated end 70 of the torsion spring 56, and causing the spring to exert a biasing force on the locking cylinder 40 which urges the cylinder to rotate in an anti-clockwise direction. This urges the locking cylinder towards the orientation shown in Figure 3.

When the switching shaft is subsequently rotated anti-clockwise from the orientation shown in Figure 9, this in turn displaces the associated end 70 of the torsion spring 56 so as to generate a biasing force urging the locking cylinder to rotate clockwise towards the configuration shown in Figure 5.

When the distal end 36 of the leaf spring has been deflected upwards by the cam follower arm 18, it can be seen that the leaf spring may resist or block rotation of the locking cylinder from one orientation to another. Accordingly, the locking cylinder is not then able to immediately respond to switching of the switching shaft. However, the movement of the switching shaft is accommodated by deformation of the torsion spring 56 which stores mechanical strain energy in the torsion spring. As and when the leaf spring then moves downwards, the biasing force exerted to the locking cylinder by the torsion spring then rotates the locking cylinder into its other orientation.

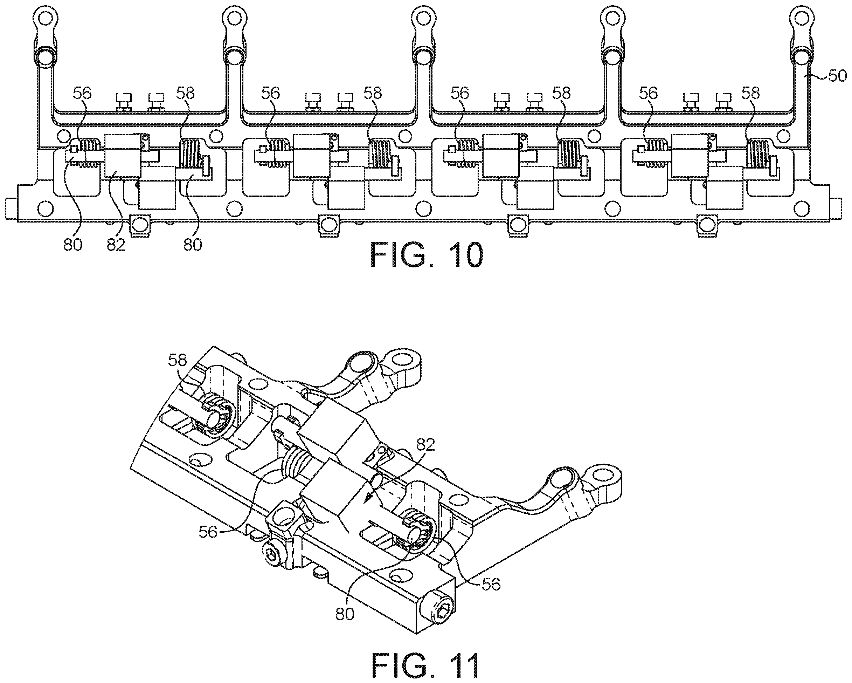

A modified embodiment of the configuration shown in Figure 2 is illustrated in Figures 10 and 11. In this embodiment, each locking cylinder has its own switching shaft 80. Each switching shaft in turn has its own actuator 82 for selectively switching the respective shaft. In such a configuration, each biasing assembly can be switched from one configuration to another independently of the others to give greater flexibility of operation of multiple actuators.

## Claims

1. An electromagnetic actuator (2) for operating a poppet valve of an internal combustion engine, the actuator comprising:
a stator (6);
a rotor (4) which is rotatable relative to the stator over a range of rotation of the rotor; and
a biasing assembly (30) for applying a torque to the rotor,
**characterised in that**
the biasing assembly is switchable between:
(a) a first configuration in which the biasing assembly exerts a torque on the rotor over at least part of the range of rotation of the rotor, wherein the torque exerted varies with the rotational position of the rotor according to a torque profile; and
(b) a second configuration in which the biasing assembly exerts substantially no torque on the rotor over the range of rotation of the rotor.

2. An actuator of claim 1, wherein the biasing assembly (30) is a mechanical assembly and comprises a resilient mechanical component (32), and preferably the biasing assembly (30) comprises a constraining member (40), wherein, in the first configuration of the biasing assembly, the constraining member is in a first orientation and constrains movement of part of the resilient mechanical component (32) and, in the second configuration, the constraining member is in a second orientation and does not constrain movement of the resilient component, as the rotor (4) rotates over its range of rotation.

3. An actuator of claim 2, wherein the rotor (4) defines a cam surface (14) and the biasing assembly (30) includes a cam follower (16) in engagement with the cam surface, and the magnitude of the torque exerted on the rotor by the biasing assembly is dependent on the magnitude of the displacement of the cam follower by the cam surface, and preferably a first part (36) of the resilient mechanical component (32) forms or is coupled to the cam follower (16) and moves in response to movement of the cam follower.

4. An actuator of claim 3, wherein a second part (34) of the resilient mechanical component (32) is more constrained in the first configuration of the biasing assembly (30) than in the second configuration, preferably the resilient mechanical component is a leaf spring (32) which is pivotably mounted, and preferably movement of the second part (34) of the resilient mechanical component is constrainable by reducing the distance between an engagement surface of the constraining member (40) and the resilient mechanical component.

5. An actuator of claim 2, or claim 3 or claim 4 when dependent on claim 2, wherein the constraining member (40) is a rotatable member which is rotated between its first orientation and its second orientation when the biasing assembly moves between its first configuration and its second configuration, respectively, wherein an engagement surface of the constraining member moves in a direction towards the resilient mechanical component when the rotatable member moves from its first orientation to its second orientation.

6. A control mechanism in combination with an actuator of any of claims 2 to 5, wherein the control mechanism comprises:
a controller (52, 54) which is moveable between first and second controller positions; and
a coupling (56, 58) between the controller and the biasing assembly (30),
wherein the coupling is arranged such that when the controller is in the first controller position, the coupling urges the constraining member (40) towards its first orientation.

7. A combination of claim 6, wherein the controller (52, 54) is able to move from its second controller position to its first controller position even if the constraining member (40) is not initially able to move into its first orientation, and preferably the coupling (56, 58) comprises a resilient component which enables the controller (52, 54) to move from its second controller position to its first controller position even if the constraining member (40) is not initially able to move into its first orientation.

8. A combination of claim 6 or claim 7, wherein the controller (52, 54) comprises a rotatable controller member which is rotatably mounted and/or the constraining member (40) is rotatably mounted, and preferably the resilient component (56, 58) is a torsion spring.

9. A combination of any of claims 6 to 8, including a plurality of actuators (2) of any of claims 1 to 5, wherein the combination includes a plurality of couplings (56, 58), with each coupling provided between the controller (52, 54) and the biasing assembly (30) of a respective one of the actuators,
wherein each coupling is arranged such that when the controller (52, 54) is in the first controller position, the coupling urges the constraining member (40) of the respective one of the actuators towards its first orientation.

10. An internal combustion engine including at least one cylinder having at least one valve and an actuator (2) of any of claims 1 to 5, wherein the actuator is arranged to actuate the at least one valve.

11. An engine of claim 10, including a plurality of cylinders each having at least one valve and combination of any one of claims 6 to 9, with each of the actuators (2) arranged to actuate a respective valve.

12. An engine of claim 11, including:
a plurality of cylinders each having at least one valve;
a plurality of combinations of any of claims 6 to 13, with the actuator (2) of each combination coupled to a respective valve;
wherein the controller (52, 54) of each combination is moveable independently of the other controllers.

13. An engine of claim 11, including:
a plurality of cylinders each having at least two valves, with one valve of each cylinder belonging to a first set of valves and a second valve of each cylinder belonging to a second set of valves;
a combination of claim 9, wherein each actuator (2) of the combination is arranged to actuate a respective one of the first set of valves; and
a further combination of claim 9, wherein each actuator (2) of the further combination is arranged to actuate a respective one of the second set of valves,
wherein the controller (52, 54) of each combination is moveable independently of the other controller.

14. A method of operating an electromagnetic actuator (2) for a poppet valve of an internal combustion engine, the actuator comprising:
a stator (6);
a rotor (4) which is rotatable relative to the stator over a range of rotation of the rotor; and
a biasing assembly (30) for applying a torque to the rotor,
**characterised in that**
the method comprises a step of switching the biasing assembly between:
(a) a first configuration in which the biasing assembly exerts a torque on the rotor over at least part of the range of rotation of the rotor, wherein the torque exerted varies with the rotational position of the rotor according to a torque profile; and
(b) a second configuration in which the biasing assembly exerts substantially no torque on the rotor over the range of rotation of the rotor.

15. A method of claim 14, wherein the actuator (2) is arranged to actuate a valve of a cylinder in an internal combustion engine.

## Patentansprüche

1. Elektromagnetisches Stellglied (2) zum Betätigen eines Tellerventils eines Verbrennungsmotors, wobei das Stellglied Folgendes umfasst:
einen Stator (6);
einen Rotor (4), der in Bezug zum Stator in einem Drehbereich des Rotors drehbar ist; und
eine Vorspannungsanordnung (30), um ein Drehmoment auf den Rotor anzuwenden,
**dadurch gekennzeichnet, dass**
die Vorspannungsanordnung zwischen folgenden Konfigurationen schaltbar ist:
(a) einer ersten Konfiguration, in der die Vorspannungsanordnung über zumindest einen Teil des Drehbereichs des Rotors ein Drehmoment auf den Rotor ausübt, wobei das ausgeübte Drehmoment je nach der Drehposition des Rotors entsprechend eines Drehmomentprofils variiert; und
(b) einer zweiten Konfiguration, in der die Vorspannungsanordnung im Drehbereich des Rotors im Wesentlichen kein Drehmoment auf den Rotor ausübt.

2. Stellglied nach Anspruch 1, wobei die Vorspannungsanordnung (30) eine mechanische Anordnung ist und eine elastische mechanische Komponente (32) umfasst, und wobei die Vorspannungsanordnung (30) vorzugsweise ein Einspannungselement (40) umfasst, wobei sich das Einspannungselement in der ersten Konfiguration der Vorspannungsanordnung in einer ersten Ausrichtung befindet und die Bewegung eines Teils der elastischen mechanischen Komponente (32) einschränkt und wobei sich das Einspannungselement in der zweiten Konfiguration in einer zweiten Ausrichtung befindet und die Bewegung der elastischen Komponente nicht einschränkt, während sich der Rotor (4) in seinem Drehbereich dreht.

3. Stellglied nach Anspruch 2, wobei der Rotor (4) eine Nockenfläche (14) definiert und die Vorspannungsanordnung (30) einen Nockenstößel (16) umfasst, der in die Nockenfläche eingreift, und wobei die Größe des von der Vorspannungsanordnung auf den Rotor ausgeübten Drehmoments von der Größe der Verschiebung des Nockenstößels durch die Nockenfläche abhängig ist, und wobei vorzugsweise ein erster Teil (36) der elastischen mechanischen Komponente (32) den Nockenstößel (16) ausbildet oder damit gekoppelt ist und sich als Reaktion auf die Bewegung des Nockenstößels bewegt.

4. Stellglied nach Anspruch 3, wobei ein zweiter Teil (34) der elastischen mechanischen Komponente (32) in der ersten Konfiguration der Vorspannungsanordnung (30) stärker einschränkt wird als in der zweiten Konfiguration, wobei die elastische mechanische Komponente vorzugsweise eine Blattfeder (32) ist, die verschwenkbar montiert ist, und wobei die Bewegung des zweiten Teils (34) der elastischen mechanischen Komponente vorzugsweise durch das Verringern des Abstands zwischen einer Eingriffsfläche des Einspannelements (40) und der elastischen mechanischen Komponente eingeschränkt werden kann.

5. Stellglied nach Anspruch 2 oder Anspruch 3 oder Anspruch 4, wenn von Anspruch 2 abhängig, wobei das Einspannungselement (40) ein drehbares Element ist, das zwischen seiner ersten Ausrichtung und seiner zweiten Ausrichtung gedreht wird, wenn sich die Vorspannungsanordnung zwischen ihrer ersten Konfiguration bzw. ihrer zweiten Konfiguration bewegt, wobei sich eine Eingriffsfläche des Einspannungselements in eine Richtung zur elastischen mechanischen Komponente bewegt, wenn sich das drehbare Element von seiner ersten Ausrichtung in seine zweite Ausrichtung bewegt.

6. Steuerungsmechanismus in Kombination mit einem Stellglied nach einem der Ansprüche 2 bis 5, wobei der Steuerungsmechanismus Folgendes umfasst:
eine Steuerung (52, 54), die zwischen einer ersten und zweiten Steuerungsstellung beweglich ist; und
eine Kupplung (56, 58) zwischen der Steuerung und der Vorspannungsanordnung (30), wobei die Kupplung derart angeordnet ist, dass, wenn sich die Steuerung in der ersten Steuerungsstellung befindet, die Kupplung das Einspannungselement (40) in seine erste Ausrichtung drückt.

7. Kombination nach Anspruch 6, wobei sich die Steuerung (52, 54) von ihrer zweiten Steuerungsstellung in ihre erste Steuerungsstellung bewegen kann, selbst wenn sich das Einspannungselement (40) zunächst nicht in seine erste Ausrichtung bewegen kann, und wobei die Kupplung (56, 58) vorzugsweise eine elastische Komponente umfasst, die zulässt, dass sich die Steuerung (52, 54) aus ihrer zweiten Steuerungsstellung in ihre erste Steuerungsstellung bewegt, selbst wenn sich das Einspannungselement (40) zunächst nicht in seine erste Ausrichtung bewegen kann.

8. Kombination nach Anspruch 6 oder Anspruch 7, wobei die Steuerung (52, 54) ein drehbares Steuerungselement umfasst, das drehbar montiert ist, und/oder wobei das Einspannungselement (40) drehbar montiert ist und vorzugsweise wobei die elastische Komponente (56, 58) eine Torsionsfeder ist.

9. Kombination nach einem der Ansprüche 6 bis 8, die mehrere Stellglieder (2) nach einem der Ansprüche 1 bis 5 umfasst, wobei die Kombination mehrere Kupplungen (56, 58) umfasst, wobei jede Kupplung zwischen der Steuerung (52, 54) und der Vorspannungsanordnung (30) eines entsprechenden Stellglieds vorgesehen ist,
wobei jede Kupplung derart angeordnet ist, dass, wenn sich die Steuerung (52, 54) in der ersten Steuerungsstellung befindet, die Kupplung das Einspannungselement (40) des entsprechenden Stellglieds in seine erste Ausrichtung drückt.

10. Verbrennungsmotor, der mindestens einen Zylinder umfasst, der mindestens ein Ventil und ein Stellglied (2) nach einem der Ansprüche 1 bis 5 umfasst, wobei das Stellglied dazu angeordnet ist, das mindestens eine Ventil zu betätigen.

11. Motor nach Anspruch 10, der mehrere Zylinder umfasst, die jeweils mindestens ein Ventil und eine Kombination nach einem der Ansprüche 6 bis 9 umfassen, wobei jedes der Stellglieder (2) dazu angeordnet ist, ein entsprechendes Ventil zu betätigen.

12. Motor nach Anspruch 11, Folgendes umfassend:
mehrere Zylinder, die jeweils mindestens ein Ventil aufweisen;
mehrere Kombinationen nach einem der Ansprüche 6 bis 13, wobei das Stellglied (2) jeder Kombination mit einem entsprechenden Ventil gekoppelt ist;
wobei die Steuerung (52, 54) jeder Kombination von den anderen Steuerungen unabhängig beweglich ist.

13. Motor nach Anspruch 11, Folgendes umfassend:
mehrere Zylinder, die jeweils mindestens zwei Ventile aufweisen, wobei ein Ventil jedes Zylinders zu einem ersten Satz Ventile gehört und ein zweites Ventil jedes Zylinders zu einem zweiten Satz Ventile gehört;
eine Kombination nach Anspruch 9, wobei jedes Stellglied (2) der Kombination dazu angeordnet ist, ein entsprechendes des ersten Satzes Ventile zu betätigen; und
eine weitere Kombination nach Anspruch 9, wobei jedes Stellglied (2) der weiteren Kombination dazu angeordnet ist, ein entsprechendes des zweiten Satzes Ventile zu betätigen,
wobei die Steuerung (52, 54) jeder Kombination von der anderen Steuerung unabhängig beweglich ist.

14. Verfahren zum Betreiben eines elektromagnetischen Stellglieds (2) für ein Tellerventil eines Verbrennungsmotors, wobei das Stellglied Folgendes umfasst:
einen Stator (6);
einen Rotor (4), der in Bezug zum Stator in einem Drehbereich des Rotors drehbar ist; und
eine Vorspannungsanordnung (30), um ein Drehmoment auf den Rotor anzuwenden, **dadurch gekennzeichnet, dass** das Verfahren einen Schritt des Schaltens der Vorspannungsanordnung zwischen den folgenden Konfigurationen umfasst:
(a) einer ersten Konfiguration, in der die Vorspannungsanordnung über zumindest einen Teil des Drehbereichs des Rotors ein Drehmoment auf den Rotor ausübt, wobei das ausgeübte Drehmoment je nach der Drehposition des Rotors entsprechend eines Drehmomentprofils variiert; und
(b) einer zweiten Konfiguration, in der die Vorspannungsanordnung im Drehbereich des Rotors im Wesentlichen kein Drehmoment auf den Rotor ausübt.

15. Verfahren nach Anspruch 14, wobei das Stellglied (2) dazu angeordnet ist, ein Ventil eines Zylinders in einem Verbrennungsmotor zu betätigen.

## Revendications

1. Actionneur électromagnétique (2) servant à faire fonctionner une soupape à champignon d'un moteur à combustion interne, l'actionneur comprenant :
un stator (6) ;
un rotor (4) qui peut tourner par rapport au stator sur une plage de rotation du rotor ; et
un ensemble de sollicitation (30) servant à appliquer un couple au rotor,
**caractérisé en ce que**
l'ensemble de sollicitation peut être commuté entre :
(a) une première configuration dans laquelle l'ensemble de sollicitation exerce un couple sur le rotor sur au moins une partie de la plage de rotation du rotor, dans lequel le couple exercé varie avec la position en rotation du rotor conformément à un profil de couple ; et
(b) une deuxième configuration dans laquelle l'ensemble de sollicitation n'exerce sensiblement aucun couple sur le rotor sur la plage de rotation du rotor.

2. Actionneur selon la revendication 1, dans lequel l'ensemble de sollicitation (30) est un ensemble mécanique et comprend un composant mécanique élastique (32), et de préférence l'ensemble de sollicitation (30) comprend un élément de limitation (40), dans lequel, dans la première configuration de l'ensemble de sollicitation, l'organe de limitation est dans une première orientation et limite le déplacement d'une partie du composant mécanique élastique (32) et, dans la deuxième configuration, l'organe de limitation est dans une deuxième orientation et ne limite pas le déplacement du composant élastique, lorsque le rotor (4) tourne sur sa plage de rotation.

3. Actionneur selon la revendication 2, dans lequel le rotor (4) définit une surface de came (14) et l'ensemble de sollicitation (30) comporte un suiveur de came (16) en contact avec la surface de came, et l'ampleur du couple exercé sur le rotor par l'ensemble de sollicitation est dépendante de l'ampleur du déplacement du suiveur de came par la surface de came, et de préférence une première partie (36) du composant mécanique élastique (32) forme le suiveur de came (16) ou est accouplée à celui-ci et se déplace en réponse au déplacement du suiveur de came.

4. Actionneur selon la revendication 3, dans lequel une deuxième partie (34) du composant mécanique élastique (32) est plus limitée dans la première configuration de l'ensemble de sollicitation (30) que dans la deuxième configuration, de préférence le composant mécanique élastique est un ressort à lame (32) qui est monté pivotant, et de préférence le déplacement de la deuxième partie (34) du composant mécanique élastique peut être limité par réduction de la distance entre une surface de contact de l'organe de limitation (40) et le composant mécanique élastique.

5. Actionneur selon la revendication 2, ou la revendication 3 ou la revendication 4 lorsqu'elle dépend de la revendication 2, dans lequel l'organe de limitation (40) est un organe rotatif qui est entraîné en rotation entre sa première orientation et sa deuxième orientation lorsque l'ensemble de sollicitation se déplace entre sa première configuration et sa deuxième configuration, respectivement, dans lequel une surface de contact de l'organe de limitation se déplace dans une direction vers le composant mécanique élastique lorsque l'organe rotatif se déplace de sa première orientation à sa deuxième orientation.

6. Mécanisme de commande en combinaison avec un actionneur selon l'une quelconque des revendications 2 à 5, le mécanisme de commande comprenant :
un dispositif de commande (52, 54) qui est déplaçable entre des première et deuxième positions de dispositif de commande ; et
un accouplement (56, 58) entre le dispositif de commande et l'ensemble de sollicitation (30),
dans lequel l'accouplement est conçu de telle sorte que lorsque le dispositif de commande est dans la première position de dispositif de commande, l'accouplement pousse l'organe de limitation (40) vers sa première orientation.

7. Combinaison selon la revendication 6, dans laquelle le dispositif de commande (52, 54) est apte à se déplacer de sa deuxième position de dispositif de commande à sa première position de dispositif de commande même si l'organe de limitation (40) n'est pas initialement apte à se déplacer dans sa première orientation, et de préférence l'accouplement (56, 58) comprend un composant élastique qui permet au dispositif de commande (52, 54) de se déplacer de sa deuxième position de dispositif de commande à sa première position de dispositif de commande même si l'organe de limitation (40) n'est pas initialement apte à se déplacer dans sa première orientation.

8. Combinaison selon la revendication 6 ou la revendication 7, dans laquelle le dispositif de commande (52, 54) comprend un organe de dispositif de commande rotatif qui est monté rotatif et/ou l'organe de limitation (40) est monté rotatif, et de préférence le composant élastique (56, 58) est un ressort de torsion.

9. Combinaison selon l'une quelconque des revendications 6 à 8, comportant une pluralité d'actionneurs (2) selon l'une quelconque des revendications 1 à 5, où la combinaison comporte une pluralité d'accouplements (56, 58), chaque accouplement étant prévu entre le dispositif de commande (52, 54) et l'ensemble de sollicitation (30) d'un actionneur respectif parmi les actionneurs,
Où chaque accouplement est conçu de telle sorte que lorsque le dispositif de commande (52, 54) est dans la première position de dispositif de commande, l'accouplement pousse l'organe de limitation (40) de l'actionneur respectif parmi les actionneurs vers sa première orientation.

10. Moteur à combustion interne comportant au moins un cylindre présentant au moins une soupape et un actionneur (2) selon l'une quelconque des revendications 1 à 5, dans lequel l'actionneur est conçu pour actionner l'au moins une soupape.

11. Moteur selon la revendication 10, comportant une pluralité de cylindres présentant chacun au moins une soupape et une combinaison de l'une quelconque des revendications 6 à 9, chacun des actionneurs (2) étant conçu pour actionner une soupape respective.

12. Moteur selon la revendication 11, comportant :
une pluralité de cylindres présentant chacun au moins une soupape ;
une pluralité de combinaisons de n'importe lesquelles des revendications 6 à 13, l'actionneur (2) de chaque combinaison étant accouplé à une soupape respective ;
dans lequel le dispositif de commande (52, 54) de chaque combinaison est déplaçable indépendamment des autres dispositifs de commande.

13. Moteur selon la revendication 11, comportant :
une pluralité de cylindres présentant chacun au moins deux soupape, une soupape de chaque cylindre appartenant à un premier ensemble de soupapes et une deuxième soupape de chaque cylindre appartenant à un deuxième ensemble de soupapes ;
combinaison selon la revendication 9, où chaque actionneur (2) de la combinaison est conçu pour actionner une soupape respective parmi le premier ensemble de soupapes ; et
une autre combinaison selon la revendication 9, où chaque actionneur (2) de l'autre combinaison est conçu pour actionner une soupape respective parmi le deuxième ensemble de soupapes,
où le dispositif de commande (52, 54) de chaque combinaison est déplaçable indépendamment de l'autre dispositif de commande.

14. Procédé de fonctionnement d'un actionneur électromagnétique (2) pour une soupape à champignon d'un moteur à combustion interne, l'actionneur comprenant :
un stator (6) ;
un rotor (4) qui peut tourner par rapport au stator sur une plage de rotation du rotor ; et
un ensemble de sollicitation (30) servant à appliquer un couple au rotor,
**caractérisé en ce que**
le procédé comprend une étape de commutation de l'ensemble de sollicitation entre :
(a) une première configuration dans laquelle l'ensemble de sollicitation exerce un couple sur le rotor sur au moins une partie de la plage de rotation du rotor, dans lequel le couple exercé varie avec la position en rotation du rotor conformément à un profil de couple ; et
(b) une deuxième configuration dans laquelle l'ensemble de sollicitation n'exerce sensiblement aucun couple sur le rotor sur la plage de rotation du rotor.

15. Procédé selon la revendication 14, dans lequel l'actionneur (2) est conçu pour actionner une soupape d'un cylindre dans un moteur à combustion interne.
